# EUROPEAN PATENT SPECIFICATION

(11) **EP 3 649 854 B1**
(45) Date of publication and mention of the grant of the patent: **03.01.2024**
(21) Application number: 19198180.2
(22) Date of filing: 19.09.2019
(51) Int. Cl.: A01K 7/02, C02F 1/32

(54) **LIQUID DISPENSER FOR ANIMALS**
FLÜSSIGKEITSSPENDER FÜR TIERE
DISTRIBUTEUR DE LIQUIDE POUR ANIMAUX

(30) Priority: 19.09.2018 US 201862733393 P; 16.10.2018 KR 20180122992
(43) Date of publication of application: 13.05.2020
(73) Proprietor: LG ELECTRONICS INC., Yeongdeungpo-Gu Seoul 07336 (KR)
(72) Inventor: YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- EP-A1- 3 315 022
- CN-A- 108 464 253
- TW-B- I 574 614

## Description

### 1. Field

A liquid dispenser to supply liquid to an animal, e.g., a pet, is disclosed herein.

### 2. Background

In recent years, the population of people raising a pet has increased, in addition attachment and interest pets. Like most animals, pets must drink water to survive and maintain a biorhythm. Since pets are often left alone and since communication with their owners is difficult, the demand for pet water dispensers or water supply devices has increased.

US 2015/0313180A1 (hereinafter referred to as "related art") discloses drinking bowls for pets. However, such drinking bowls have various disadvantages, which the present disclosure solves.

CN 108 464 253 A, EP 3 315 022 A1 and TW I 574 614 B disclose each a liquid dispenser according to the preamble of claim 1.

The invention is specified in the independent claims. Further aspects of the invention are defined in the dependent claims.

### BRIEF DESCRIPTION OF THE DRAWINGS

FIG. 1 is a perspective view showing a pet water dispenser according to an embodiment;
FIG. 2 is a side sectional view of the pet water dispenser shown in FIG. 1;
FIG. 3 is a view showing a state in which an inner assembly shown in FIG. 2 is separated from a water tank;
FIG. 4 is a side sectional view showing the water tank shown in FIG. 2;
FIG. 5 is an exploded perspective view showing a filter and the pump shown in FIG. 2;
FIG. 6 is a side sectional view of the filter and the pump shown in FIG. 2,
FIG. 7 is an exploded perspective view of a water supply plate, plate support, supporting ring, and partition plate shown in FIG. 2;
FIG. 8 is a side sectional view of the state where the components shown in FIG. 7 and an illumination assembly are combined;
FIG. 9 is an exploded perspective view of FIG. 8;
FIG. 10 is a side sectional view showing a water guide shown in FIG. 2;
FIG. 11 is a side sectional view showing a water guide according to a second embodiment; and
FIG. 12 is an exploded perspective view showing various electronic devices installed in a container support of a water tank.

### DETAILED DESCRIPTION

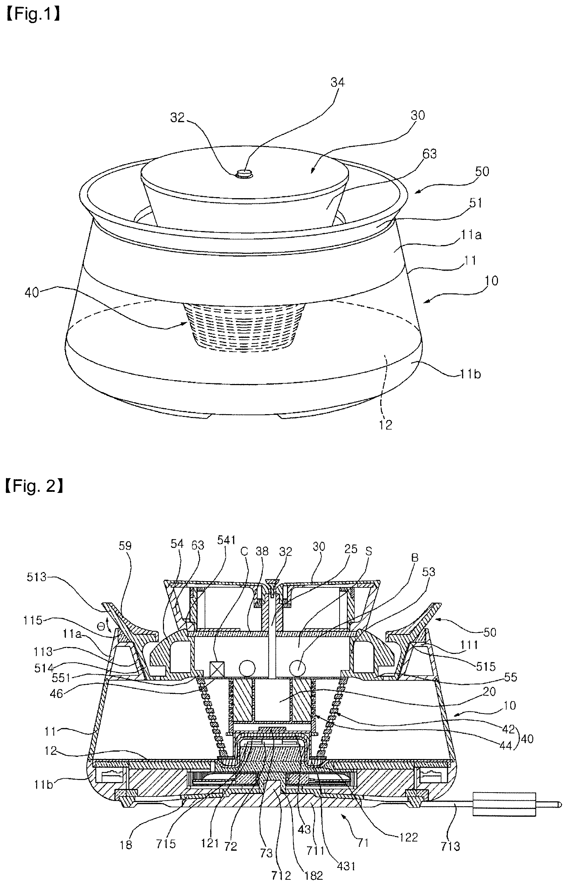

Referring to Figures 1 to 3, a pet water dispenser according to an embodiment includes a water storage chamber or water tank 10 having an opened upper side or an open top and an inner assembly 100 covering the open top of the liquid tank 10. The inner assembly 100 may have a water supply plate or upper plate 30 and a support 63 to project the water supply plate 30 upward. The support 63 may serve as a light diffuser and also may be referred to as a light guide or light guide plate.

The water supply plate 30 may include a water supply hole 32 and a float or plug 34 at least partially inserted into the water supply hole 32. Water stored in the water tank 10 is pumped by a pump 20 to an upper surface of the water supply plate 30 via the water supply hole 32, and flows over the water supply plate 30. The plug or float 34 may serve as a diverter.

The inner assembly 100 may include the pump 20, a water supply pipe 25, the water supply plate 30, and a water guide 50, which may be integrally combined to form a single inner assembly 100. The pump 20 may be installed or located in a center of the water tank 10 when the inner assembly 100 is coupled to the water tank 10. The water supply pipe 25 transfers the water discharged from the pump 20 to the water supply plate 30. The water supply pipe 25 may be arranged in the vertical direction of the inner assembly 100.

The pump 20, the water supply pipe 25, the water supply plate 30 and the water guide 50 may all be combined as one single inner assembly. The pet water dispenser may be formed of the water tank 10 and the inner assembly 100, which may be insertably coupled to each other. When a user lifts the inner assembly 100 by holding a water guide or a water receiver 50, which may be the lowermost part of the inner assembly 100, the inner assembly 100 may be separated from the water tank 10. The user may easily exchange or replace the water stored in the water tank 10 or easily wash the water tank 10 after detaching the inner assembly 100 from the water tank 10.

The inner assembly 100 includes a filter or filter assembly 40 to filter the water stored in the water tank 10. The pump 20, the water supply pipe 25, the water supply plate 30, the water guide 50, and the filter assembly 40 may be combined to form a single inner assembly 100. If the inner assembly 100 further comprises a filter assembly 40, the pump 20 may pump the filtered filtrate or water of the filter assembly 40.

The filter assembly 40 may include a first filter 42 and a second filter 44 provided within the first filter 42. A support cylinder 44b may be provided in a lower section the second filter 44.

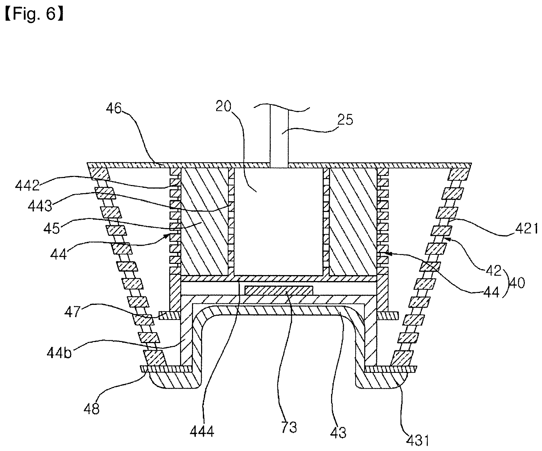

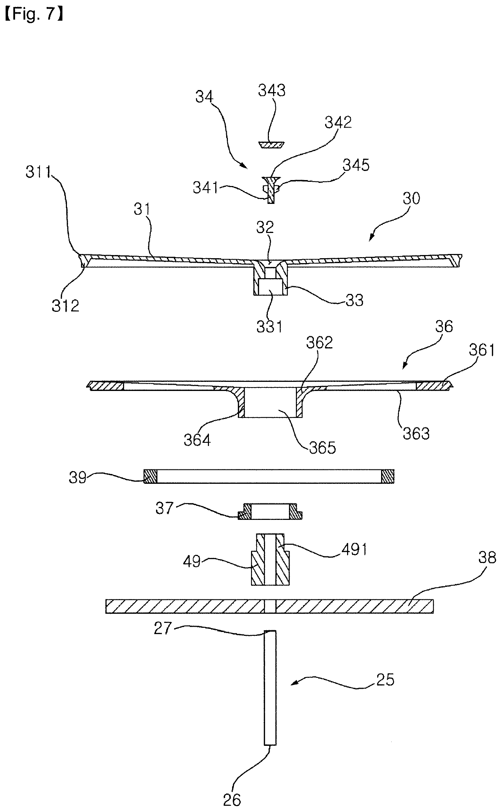

Further, the inner assembly 100 may further include at least one UV (Ultraviolet Ray) filter or light 47, 48, and/or 49 to sterilize water provided in the filter assembly 40 and/or to surround the water supply pipe 25. See FIGS. 6 and 7. The inner assembly 100 further comprises at least one UV filter 47, 48, or 49, and the pump 20, the water supply pipe 25, the water supply plate 30, the water guide 50, the filter assembly 40, and the at least one UV filter 47, 48 or 49 may form a single inner assembly 100.

The UV filter 47, 48, and/or 49 may comprise a UV LED (Ultraviolet Light-Emitting Diode) and may emit UV radiation. The UV filter 47 and/or 48 may sterilize water stored in the water tank 10, and the UV filter 49 may sterilize the water discharged from the water supply pipe 25.

The water tank 10 may include a container 10a having the opened top of the water tank 10 and storing water therein, and a container support 11b provided below the container 10a. The container support 11b may provide a sealed or dry space separate from the container 10a in which electronic devices may be installed. A bottom plate 12 may separate the container 10a from the container support 11b.

The container 10a may include tubular walls 11 and 11a provided above the bottom plate 12. Water may be stored in an inner space formed by the walls 11 and 11a and the bottom plate 12. The walls 11 and 11a may be formed in a cylindrical or truncated cone shape having a diameter that recedes toward the top of the water tank 10.

The wall 11 may be a main or middle wall, and the wall 11a may be an upper wall positioned on an upper end of the main wall 11. The main wall 11 may be formed of a transparent material (e.g., glass or plastic), and the upper wall 11a may be formed of an opaque material (e.g., stainless steel or pigmented plastic). The main wall 11 may define a portion of the water tank 10 where water is substantially stored. The user may visually check a water level and possible contamination level via the transparent main wall 11.

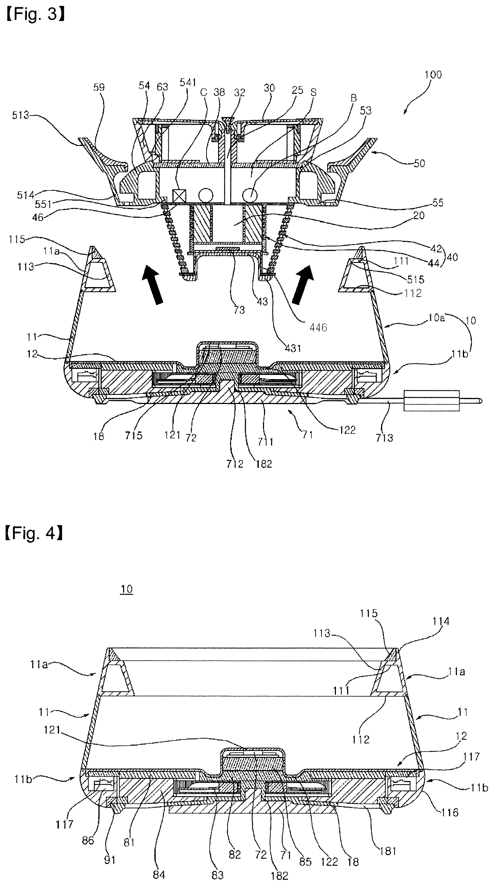

As shown in FIG. 4, first and second protruding plates 111 and 112 may be formed on an inner surface of the upper wall 11a to protrude toward the center of the water tank 10. An inner inclined surface or inner tank wall 113 may extend between the first and second protruding plates 111 and 112. The inner tank wall 113 may be inclined inward from an upper end to a lower end.

The upper wall 11a may be formed with an upward projection or extension 114 protruding upward from the first protruding plate 111. A bumper 115 may be attached to an inner surface of the extension 114 and/or an upper surface of the first protruding plate 111. The bumper 115 may be made of an elastic material (e.g., rubber) and may therefore also be referred to as packing or cushioning. The water guide 50 may be placed on the upper wall 11a so that an upper inclined surface 513 of an outer guide wall 51 may be in close contact with the bumper 115. A lower inclined surface 514 of the outer guide wall 51 may be supported inside the inner tank wall 113. See FIG. 2.

A projection 121 may be formed to protrude upward from a center of the bottom plate 12. The projection 121 may be formed by curving a center of the bottom plate 12 convexly upward such that the projection 121 has a hollow inner space. The filter assembly 40 of the inner assembly 100 may be inserted onto the projection 121, so that the inner assembly 100 is coupled to the water tank 10 via the outer guide wall 51 resting on the inner tank wall 113 and the first protruding plate 111 and via the filter assembly 40 provided on the projection 121. The bottom plate 12 may be further formed with a ring-shaped groove or recess 122 recessed downward around the protrusion 121 in which a lower end of the filter assembly 40 of the inner assembly 100 may be seated. Details of a coupling of the filter assembly 40 and the projection 121 will be described later.

A first wireless power transfer device 72 (e.g., a wireless power transmitter and/or transceiver) may be installed in the inner space of the protrusion 121, while a second wireless power transfer device 73 (e.g., a wireless power receiver and/or transceiver) may be provided in the inner assembly 100 to align with the first wireless power transfer device 72.

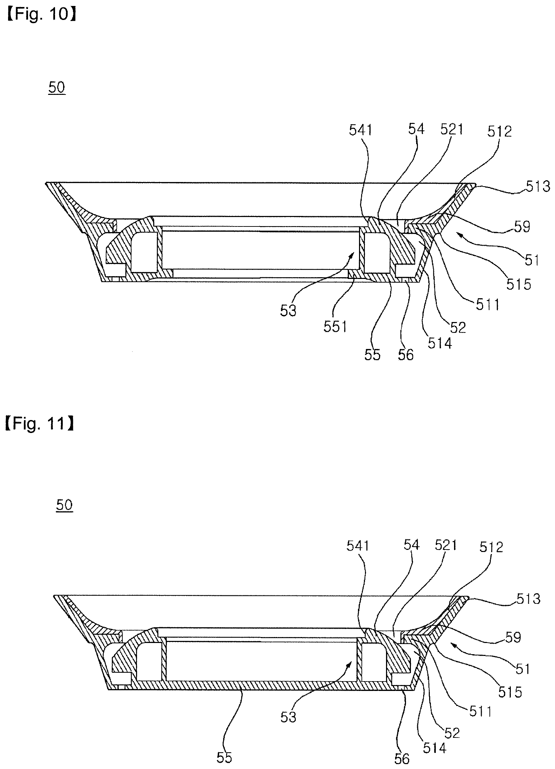

The inner assembly 100 may further include a partition plate 38. The partition plate 38 may be spaced apart from and provided below the water supply plate 30. The water supply pipe 25 may penetrate through the partition plate 38. The partition plate 38 may be inserted into a groove 541 (FIG. 10) formed on an upper side or surface of an inner guide wall 53 of the water guide 50 to cover an opened upper side of the inner guide wall 53 and seal off a space or a chamber S in which electronic devices such as a control module or controller C and an auxiliary battery B may be provided. Details of the sealed space S will be described later.

The water supply plate 30 may be configured to be removable from the inner assembly 100. The water supply plate 30 may be lifted up and removed to be cleaned, repaired, or swapped with another water supply plate 30 having a different height, shape, angle of inclination, material, etc.

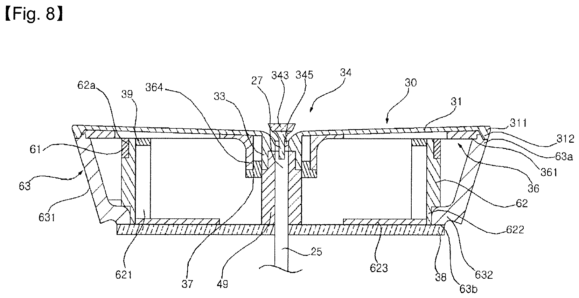

An illumination assembly 60 may be provided between the partition plate 38 and the water supply plate 30. The illumination assembly 60 may include the support 63 and a light base 62 having at least one light emitting device or light device 61 (FIG. 8). Lower ends of the support 63 and the light base 62 may be provided on the partition plate 38. The support 63 may also extend between the water supply plate 30 and an upper surface of the water guide 50. Additional details of the illumination assembly 60 will be described later with reference to FIG. 8.

The pump 20 pumps the water stored in the water tank 10 to the water supply plate 30. The pump 20 may be spaced apart from the bottom plate 12 of the water tank 10. The water supplied from the water supply pipe 25 flows to an upper surface 31 (FIG. 7) via the water supply hole 32 and may flow over an edge 311 (FIG. 7) of the water supply plate 30. The water guide 50 may be provided between the water tank 10 and the water supply plate 30.

The filter assembly 40 may be installed inside a center of the water tank 10 when the inner assembly 100 is coupled to the water tank 10. The filter assembly 40 may filter foreign substances contained in the water before the water stored in the water tank 10 flows into the pump 20.

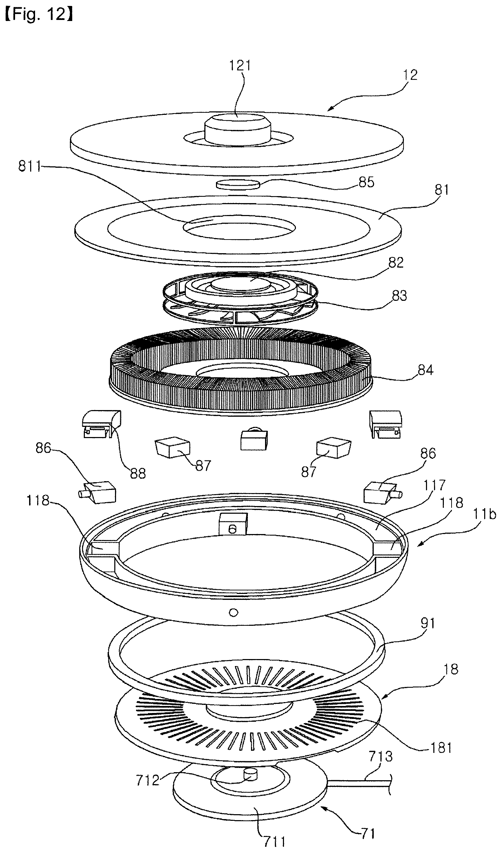

The pet water dispenser may further include a power supply device or assembly, an illumination assembly 60, a water level sensor 86, a water temperature sensor 85, a proximity sensor 87, a contamination level sensor 89, and a water temperature maintenance device or assembly to be described later with reference to FIG. 12.

Referring to Figures 1, 2, and 4, the container 10a may be formed in a cylindrical or truncated cone shape having a smaller diameter toward an upper side. However, the shape of the container 10a and the water tank 10 is not limited thereto and may be formed in other shapes. In the case where the container 10a is formed into a truncated cone shape whose diameter diminishes upward as described above, even if a considerable external impact is applied to the water tank 10, the water tank 10 may be stably positioned and not overturned.

The upper wall 11a may extend upward from the main wall 11. First and second protruding plates 111 and 112 may be formed on an inner surface of the upper wall 11a to protrude toward the center of the water tank 10. An inner inclined surface or inner tank wall 113 may extend between the first and second protruding plates 111 and 112. The inner tank wall 113 may be inclined inward from an upper end to a lower end.

The first and second protruding plates 111 and 112 may protrude horizontally toward a center of the water tank 10 from the inner side or surface of the upper wall 11a, and may be spaced apart from each other in a vertical direction. The first protruding plate 111 may be provided on above the second protruding plate 112. Lengths and positions of the first and second protruding plates 111 and 112 may be configured to set an inclination of the inner tank wall 113, which may be configured to support the lower inclined surface 514 of the water guide 50.

Therefore, a space or void may be formed within the first and second protruding plates 111 and 112 and the inner tank wall 113 so that a weight of the water tank 10 may be reduced. When the upper wall 11a is formed of an expensive material that enhances aestheticism, the voids formed inside the first and second protruding walls 111 and 112 and the inner tank wall 113 may reduce an amount of material required to form the upper wall 11a, thereby reducing the cost of the upper wall 11a.

The second protruding plate 112 may protrude further inward than the first protruding plate 111 and may therefore have a length longer than a length of the first protruding plate 111. The inner tank wall 113 may connect to inner sides or ends of the first protruding plate 111 and the second protruding plate 112.

The upper wall 11a may extend upward in a same direction as the main wall 11 and may protrude upward from the main wall 11. An inclination of the upper wall 11a may be the same or similar to an inclination of the main wall 11 to provide a seamless appearance of the container 10a. Alternatively, the upper wall 11a may extend upward from the main wall 11 so as to be wider or narrower in the radial direction than the main wall 11.

The upper wall 11a may be formed with an upward projection or extension 114 protruding upward from the first protruding plate 111. A bumper 115 may be attached to an inner surface of the extension 114 and/or an upper surface of the first protruding plate 111. The bumper 115 may be made of an elastic material (e.g., rubber) and may therefore also be referred to as packing or cushioning. The water guide 50 may be placed on the upper wall 11a so that the upper inclined surface 513 may be in close contact with the bumper 115.

The bumper 115 may be formed to be in close contact with an outer wall or outer guide wall 51 of the water guide 50. The outer guide wall 51 of the water guide 50 may include the upper and lower inclined surfaces 513 and 514. See FIG. 10.

A projection 121 may be formed to protrude upward from a center of the bottom plate 12. The projection 121 may be formed by curving a center of the bottom plate 12 convexly upward such that the projection 121 has a hollow inner space. A first wireless power transfer device 72 (e.g., a wireless power transmitter and/or transceiver) may be installed in the inner space of the protrusion 121.

The bottom plate 12 may be formed integrally with the main wall 11. Alternatively, the bottom plate 12 may be formed separately from the main wall 11 and coupled with the main wall 11. The bottom plate 12 may be further formed with a ring-shaped groove or recess 122 recessed downward around the protrusion 121.

The main wall 11, the upper wall 11a, and the container support 11b may be made of the same material and integrally manufactured. Alternatively, the main wall 11, the upper wall 11a, and the container support 11b may be separately made of different materials and joined to each other to be integral with each other. The main wall 11 may be formed of a different material from the upper wall 11a and the container support 11b, and the upper wall 11a and the container support 11b may be formed of the same material. The upper wall 11a and the container support 11b may be made of a material (e.g., stainless steel) to enhance aesthetic appeal. The main wall 11 may be made of a transparent material (e.g., glass).

An outer circumferential surface 116 of the container support 11b may be curvedly extended downward from a lower edge of the main wall 11. When an external impact is applied to the water tank 10 to tilt the water tank 10, a curvature of the outer peripheral surface 116 may roll such that the water tank 10 may return or be reoriented back to an initial orientation. The outer circumferential surface 116 may prevent the water tank 10 from completely overturning or spilling.

Furthermore, the curvature of the outer circumferential surface 116 may allow a user easily lift the water tank 10 without needing to wedge or insert fingers between the outer circumferential surface 116 and a floor or ground surface. The user may place fingers in a space under a curved corner of the outer circumferential surface 116 and the floor to easily lift and balance the pet water dispenser.

A mounting portion 117 may be formed to extend from an inner surface of the container support 11b toward a center of the container support 11b. An upper surface of the mounting portion 117 may be provided under the bottom plate 12. A groove or recess may be formed in the mounting portion 117 to provide a mounting space where a water level sensor or load sensor 86 may be provided. The water level sensor 86 may be a strain gauge or load sensor that senses a weight of the water applied to the bottom plate 12. The controller C may determine the water level in the water tank 10 based on the weight sensed by the load sensor 86. Details of the mounting portion 117 will be provided in further detail with reference to Figures 12.

The main wall 11, the upper wall 11a, and the container support 11b may be welded or bonded together for integration. Further, the container support 11b may be formed so that the upper and lower sides thereof are open. The opened upper side of the container support 11b may be covered by the bottom plate 12 and the opened lower side of the container support 11b may be covered with a base plate 18. The container support 11b and the base plate 18 may form a base of the container 10a.

The base plate 18 may be spaced apart from and below the bottom plate 12. Various devices (e.g., thermoelectric element 81) may be installed in an inner space of the container support 11b between the base plate 18 and the bottom plate 12. The base plate 18 may be placed on a docking station 71 and may be formed to have a circular shape. Details of the container support 11b and the base plate 18 will be described later with reference to FIG. 12.

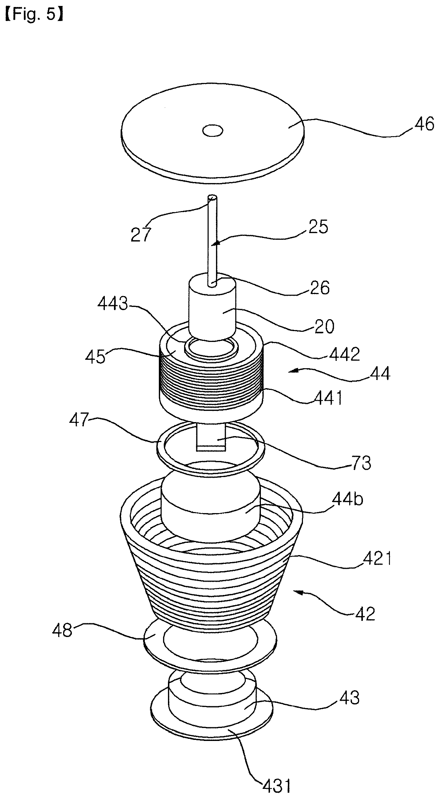

Referring to Figures 2, 5, and 6, the filter assembly 40 may be formed in a cylindrical or truncated cone shape. The filter assembly 40 may include a first filter 42 and a second filter 44. The first filter 42 may be formed in a cylindrical or truncated cone shape and of a rigid material (e.g., stainless steel). A plurality of through holes 421 may be formed in a wall of the first filter 42. The wall may form the circumferential surface of the first filter 42 and may be inclined inward from an upper end to a lower end. The first filter 42 may therefore have an increasing diameter from the lower end to the upper end.

The first filter 42 may filter foreign substances having a particle size larger than a size of the through holes 421. For example, when a pet licks water on the upper surface 31 of the water supply plate 30, food in the mouth or on the snout of the pet may be dropped and mixed with the water stored in the water tank 10. The first filter 42 may prevent such foreign matter having a particle size larger than the through hole 421 from passing through the through hole 421.

The first filter 42 may be opened at upper and lower ends. The first filter 42 may include a lower filter cover or cap 43 provided to cover the lower end. The lower filter cover 43 may be formed separately from the first filter 42 and later combined with the first filter 42. Alternatively, the lower filter cover 43 may be formed as a single body with the first filter 42.

The lower filter cover 43 may be inserted onto the projection 121 formed on the bottom plate 12 of the water tank 10. The lower filter cover 43 may be formed so as to be convex upward so as to cover the protrusion 121. An inner surface of the lower filter cover 43 may be configured to have a shape corresponding to an outer surface contour of the protrusion 121. The protrusion 121 may be inserted into the lower filter cover 43.

A flange 431 may be formed at an edge of the lower filter cover 43. The flange 431 may be inserted into the groove 122 formed around the protrusion 121 of the bottom plate 12. The first filter 42 may therefore be secured at a predetermined position on the protrusion 121 without being moved in a horizontal or lateral direction.

The second filter 44 may be provided in a hollow portion or inner space of the first filter 42, and the pump 20 may be installed in a hollow portion or inner space of the second filter 44. The second filter 44 may comprise a filter housing and a filtration material 45 (e.g., a carbon filter). The filter housing may include an outer wall 442 formed with a plurality of through holes 441 and an inner wall 443 spaced apart from the outer wall 442 and also having a plurality of through holes. The filtration material 45 may be filled in a space formed between the outer wall 442 and the inner wall 443.

The outer wall 442 and the inner wall 443 may be formed vertically so as to be cylindrical. The plurality of through holes 441 may be formed throughout the outer wall 442. Alternatively, the plurality of through holes 441 may be formed throughout an upper section of the outer wall 442. The plurality of through holes of the inner wall 443 may be formed throughout the inner wall 443. The plurality of through holes 421, 441, and those of the inner wall 443 may be formed as circumferential slits. The filtration material 45 may filter foreign matter having a smaller particle size than the through hole 441 formed in the outer wall 442.

A support cylinder 44b may be optionally installed inside the first filter 42 below the second filter 44. The wireless power receiver 73 may be provided on the support cylinder 44b. The lower filter cover 43 may be inserted into the support cylinder 44b, and a top surface of the support cylinder 44b may close an opened lower end of the second filter 44. The support cylinder 44b may be hollow so that the lower filter cover 43 may be inserted into an opened lower side of the support cylinder 44b.

The second filter 44 may be formed with a support plate 444 to support a lower side of the filtration material 45 and a lower side of the pump 20. The outer wall 442 of the second filter 44 may project below the support plate 444. The support plate 444 may therefore divide the second filter 42 between upper and lower sections. The lower section of the outer wall 442 may be coupled to an outer side surface of the support cylinder 44b.

The lower end of the first filter 42 may be seated on the upper surface of the flange 431 of the lower filter cover 43. A first UV filter 47 may be provided on the lower end of the outer wall 442 of the second filter 44. A second UV filter 48 may be provided on an upper surface of the flange 431, and the lower end of the first filter 42 and a lower end of the support cylinder 44b may be provided on the second UV filter 48. The second UV filter 48 may be formed in a ring shape. The second UV filter 48 may therefore be referred to as an engagement ring or portion.

An upper end of the support cylinder 44b may be coupled to the lower end of the second filter 44. A spiral or threads may be formed on an inner peripheral surface of the lower end of the second filter 44, and a corresponding spiral or threads may be formed on an outer peripheral surface of the upper end of the support cylinder 44b. The spiral or threads of the second filter 44 and the spiral or threads of the support cylinder 44b may be engaged with each other so that the second filter 44 and the support cylinder 44b may be screwed to each other.

The wireless power receiver 73 may be seated on an upper surface of the support cylinder 44b, and the upper surface of the support cylinder 44b and the support plate 444 may each couple to the outer wall 442 second filter 44 to create a sealed or dry space between the support plate 447, the upper surface of the support cylinder 44b, and the lower section of the outer wall 443. Therefore, there may not be any through holes 441 on the lower section of the outer wall 442.

The pump 20 may be provided inside the inner wall 443 of the second filter 44. The water having passed through the first filter 42 and the filtration material 45 is sucked into the pump 20 through the through holes formed in the inner wall 443 of the second filter 44.

A first UV filter 47 may be provided on an upper peripheral or side surface of the support cylinder 44b, and may be formed to have a ring shape. The first UV filter 47 may include a plurality of first UV LEDs spaced apart from each other along a circumferential direction. The first UV filter 47 may dissolve or kill bacteria or other foreign substances in the water introduced into the first filter 42 by diffusing the light or radiation generated by the plurality of first UV LEDs.

The plurality of first UV LEDs may be spaced from each other along the circumferential direction on an inner circumferential surface of the first UV filter 47. Therefore, the light generated by the plurality of first UV LEDs may be irradiated radially outward from the first UV filter 47.

The second UV filter 48 may be installed on a lower surface of the wall of the first filter 42. The second UV filter 48 may include a plurality of second UV LEDs spaced apart from each other along a circumferential direction. The second UV filter 48 may dissolve or kill bacteria or other foreign substances in the water stored in the water tank 10 by diffusing light or radiation generated by the plurality of second UV LEDs.

The plurality of second UV LEDs may be spaced from each other along the circumferential direction on an inner circumferential surface of the second UV filter 48. Therefore, the light generated by the plurality of first UV LEDs may be irradiated radially outward from the second UV filter 48.

The filter assembly 40 may be opened at upper and lower ends. The upper filter cover 46 may cover the open upper end of the filter assembly 40 and the lower filter cover 43 may cover the open lower end of the filter assembly 40.

The upper filter cover 46 may be placed on the upper ends of the first and second filters 42 and 44. The water supply pipe 25 may penetrate the upper filter cover 46. The upper filter cover 46 may seal an upper side of the pump 20 and upper sides of the first and second filters 42 and 44. The first and second filters 42 and 44 and the upper filter cover 46 may be joined together by a method such as adhesion or fusion so as to be integral with each other. Alternatively, the first and second filters 42 and 44 may be assembled to be detachable from each other by a female hook member and a male hook member which engage with each other or by a screw method.

The lower end of the support cylinder 44b may be covered by the lower filter cover 43. The support cylinder 44b and the lower filter cover 43 may be formed integrally as one piece, or may be made separately and later attached to each other.

When the lower filter cover 43 is formed integrally with the first filter 42 or when the lower filter cover 43 is formed separately from the first filter 42 and combined with the first filter 42, the support cylinder 44b may be placed on the lower filter cover 43. When the lower filter cover 43 is formed integrally with the support cylinder 44b or the lower filter cover 43 is formed separately from the support cylinder 44b and joined with the support cylinder 44b, the filter 42 may be placed on the flange 431 of the lower filter cover 43. At least one of the first and second filters 42 and 44 may be optional. Alternatively, a third, fourth, etc. filter not shown may be included.

A water inlet 26 may be formed at a lower end of the water supply pipe 25 and a water outlet 27 may be formed at an upper end of the water supply pipe 25. The water discharged from the pump 20 flows into the water supply pipe 25 through the water inlet 26, is moved along the water supply pipe 25, and is then discharged to the outside of the water supply pipe 25 through the water outlet 27.

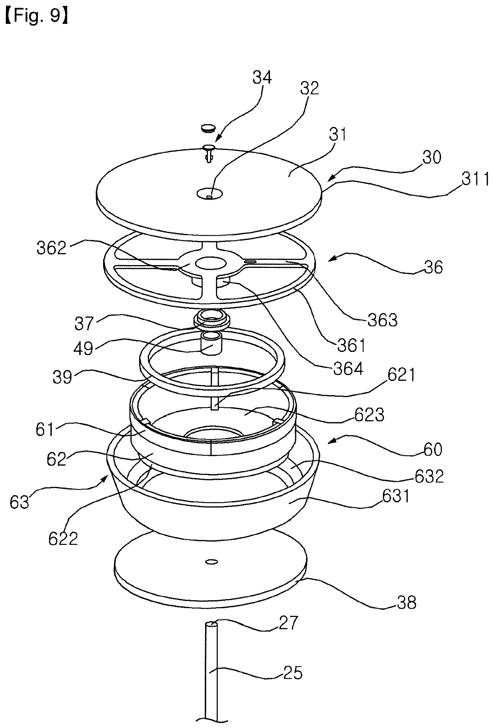

Referring to FIGS. 2 and 7-9, the water supply plate 30 may be formed of a plate having a flat and smooth upper surface 31. A water supply hole 32 may be formed at a center of the water supply plate 30. The water supply hole 32 may communicate with the water outlet 27 of the water supply pipe 25. A first boss 33 may be formed to protrude downward from a lower surface of a central portion of the water supply plate 30, and the water supply hole 32 may be formed to penetrate the first boss 33 in the vertical direction.

The water supply hole 32 may supply the water supplied from the water supply pipe 25 to the upper surface 31 of the water supply plate 30. The water moved to the upper surface 31 of the water supply plate 30 through the water supply hole 32 may be returned to the water tank 10 from the edge 311 of the water supply plate 30 and the water guide 50. The water outlet 27 the water supply pipe 25 may be inserted into the water supply hole 32 or provided below the water supply hole 32 so that the water outlet 27 may communicate with the water supply hole 32.

Although the water supply plate 30 is illustrated as a disc, it may be formed in a different shape. For example, the water supply plate 30 may be formed in a rectangular plate shape, a hexagonal shape, or a triangular plate shape.

The upper surface 31 may have a sloped surface with a higher edge 311 and a lower center. Alternatively, the upper surface 31 may be sloped such that the edge 311 may be lower than the center. The edge 311 of the water supply plate 30 may be formed with an edge protrusion 312 slightly protruding downward from the lower surface of the water supply plate 30.

A nozzle stopper or plug 34 may be at least partially inserted into the water supply hole 32. A lower end or stem 341 of the plug 34 may be at least partially inserted into the water supply hole 32, and a upper end or head 342 of the plug 34 may be spaced upward from the water supply hole 32. Alternatively, the plug 34 may be a float which moves up and down based on water flowing out of the water outlet 27 of the water supply pipe 25, and the float may completely close the water supply hole 32 when the pump 20 is turned off.

An outer peripheral surface of the head 342 may include at least one inclined surface that is sloped outward from an upper end of the stem 341 to an upper end of the head 342. Water discharged from the water outlet 27 of the water supply pipe 25 may strike the outer peripheral surface of the head 341 and spread to a side or the edge 311 of the water supply plate 30. The water spouting from the water supply hole 32 may therefore form a water wall or water film sprayed toward the edge 311 of the water supply plate 30 and may cascade down from the edge 311.

The plug 34 may include a head cover 343 coupled to the head 342. The lower end of the stem 341 may be inserted into the water supply hole 32. A plurality of engaging pieces or ribs 345 spaced apart from each other in a circumferential direction of the stem 341 may be formed on the circumferential surface of the stem 341. The head 342 may be formed above the stem 341. The head cover 343 may be coupled to the head 342. The head cover 343 may be formed separately from the head 342 and coupled to the head 342 or may be integrally formed with the head 342.

The water supply plate 30 may be made of stainless steel. Alternatively, the water supply plate 30 may be made of a transparent or semitransparent material to transmit light from illumination assembly 60 to an outside of the water supply plate 30. The water supply plate 30 may be formed to have a thin thickness.

A plate support 36 to support the water supply plate 30 may be provided below the water supply plate 30. The plate support 36 may be supported by a light base or support 62 and/or the support or light diffuser 63, which will be described later.

The plate support 36 may include an outer ring 361 abutting against the edge protrusion 312, a hub or inner ring 362 positioned centrally, and a plurality of spokes 363 extending between the outer and hub rings 361 and 362. A boss or second boss 364 may protrude from the lower side of the hub ring 362. The first boss 33 of the water supply plate 30 may be inserted into a hole 365 formed through the hub ring 362 and the second boss 364. A sealing ring 37 may be forcedly inserted between the first boss 33 formed in the water supply plate 30 and the second boss 364 formed in the plate support 36. The sealing ring 37 may be made of an elastic material (e.g., rubber) and may also be referred to as a packing ring.

The water supply pipe 25 may be provided below the water supply plate 30 and penetrate through the partition plate 38 located below the plate support 36, and the water outlet 27 may be connected to the water supply hole 32 of the water supply plate 30. A third UV filter 49 to sterilize water passing through the water supply pipe 25 or discharging from the water outlet 27 may be provided around the water supply pipe 25. The third UV filter 49 may be formed in a cylindrical shape having a length in the vertical direction. The upper end of the water supply pipe 25 may at least partially pass through the third UV filter 49.

The third UV filter 49 may comprise a plurality of third UV LEDs spaced apart from each other along a circumferential direction. The third UV filter 49 may dissolve or kill bacteria or foreign substances in the water via UV radiation generated from the plurality of third UV LEDs to sterilize water discharged from the water outlet 27 of the water supply pipe 25. The plurality of third UV LEDs may be provided on a lower surface of the third UV filter 49 along the circumferential direction. Accordingly, the light generated by the plurality of third UV LEDs may be irradiated to an upper side of the third UV filter 49.

A hole 331 extending downward from the water supply hole 32 may be formed in a lower portion of the first boss 33 formed in the water supply plate 30. The hole 331 may be formed to be wider than the water supply hole 32. The hole 331 may be an insertion hole into which an upper end or portion 491 of the third UV filter 49 is inserted.

The water supply pipe 25 may at least partially penetrate the interior of the third UV filter 49. The upper end of the third UV filter 49 may be installed at a same position as the water outlet 27, or alternatively may be installed so as to cover a position higher than the water outlet 27 so as to directly irradiate UV light to the water discharged from the outlet 27.

A reinforcing ring 39 may be provided on a bottom surface of the plate support 36. The reinforcing ring 39 may be supported by reinforcing ribs 621 of the light base 62.

The water supply plate 30 may be detachably assembled to the inner assembly 100. The water supply plate 30 may be pulled or lifted upward to overcome an elastic force of the sealing ring 37 to be separated from the plate support 36. The user may replace the water supply plate 30 with another water supply plate having a different shape or height after separating the water supply plate 30 from the plate support 36.

Referring to Figures 2 and 7-9, an illumination assembly 60 may be installed below the water supply plate 30 and the plate support 36. The illumination assembly 60 may include a light emitting device or light device 61, a light support or base 62 on which the light device 61 is installed, and a support 63 provided on a periphery of the light base 62. The support 63 may be formed in a truncated cone shape, while the light base 62 may be formed in a cylindrical shape provided within an inner space of the support 63.

The support 63 may be formed to have a wider diameter toward the upper end 63a. The upper end 63a of the support 63 may be in contact with the edge protrusion 312 of the water supply plate 30 and the outer ring 361 of the plate support 36. The lower end 63b of the support 63 may be brought into contact with the partition plate 38.

The outer circumferential surface 631 of the support 63 may be an inclined surface gradually inclined inward from the edge 311 of the water supply plate 30. The water dropped from the edge 311 may fall vertically without flowing along the support 63. The dropping of water creates a waterfall to stimulate running water, which is pleasing for animals.

The light device 61 may be formed of a plurality of light emitting diodes (LEDs). The light devices 61 may be attached to and installed on the light base 62, and may be formed in an array of predetermined shapes or a ring shape. The light base 62 may therefore also be referred to as a light mount.

The light device 61 may be formed in a ring shape, and may be installed on an outer surface of an upper end of the light base 62. A concave portion or recess 62a may be formed on the outer surface of the upper end of the light base 62. The light device 61 may be inserted and attached to the recess 62a.

At least one reinforcing rib 621 may be formed on an inner surface of the light base 62. The at least one reinforcing rib 621 may support a reinforcing ring 39. A recessed portion or recess 622 may be formed on the outer surface of a lower end of the light base 62. An inward protrusion 632 protruding inwardly from the lower end 63b of the support 63 may be inserted into the recess 622.

A printed circuit board (PCB) 623 to control a light emission of the light device 61 may extend horizontally from the inner surface of the light base 62 at a lower end so as to be placed on an upper surface of the partition plate 38. The light base 62, the support 63, and the partition plate 38 may be bonded or welded together. Alternatively, the light base 62, the support 63, and the partition plate 38 may be assembled to be detachable from each other.

Referring to Figures 1, 2, and 10, the water guide 50 may be provided below the water supply plate 30 to cover the opened upper side of the water tank 10 to catch water falling from the edge 311 and guide the water to the water tank 10. The water guide 50 may include an outer guide wall 51 forming an outer rim and an inner guide wall 53 forming an inner rim. A drain passage 52 may be formed between the outer and inner guide walls 51 and 53. The water guide 50 may further include a bottom wall 55 connecting lower ends of the outer and inner guide walls 51 and 53. The bottom wall 55 may be provided with a discharge hole 56 communicating with the drain passage 52 to discharge the water supplied to the water guide 50 into the water tank 10. The discharge hole 56 may be formed of at least one arc-shaped hole, a ring-shaped hole, or a circular hole formed along a circumferential direction of the bottom wall 55.

The lower end 63a of the support 63 may be provided on the inner guide wall 53. A guide 54 may be formed on an upper surface of the inner guide wall 53. The guide 54 may protrude toward the outer guide wall 51 and may be inclined downward. The guide 54 may also protrude from the lower end 63b of the support 63.

The guide 54 may receive water flowing down the inclined surface 631 of the support 63 and guide the water downward. Further, the guide 54 may receive the water falling off the edge 311 of the water supply plate 30 and guide the water downward. The outer surface of the guide 54 may be a convex round surface that is curved outwardly. The round surface may be formed at a predetermined interval from the lower end 63b of the support 63 downward.

The water flowing downward along the outer circumferential surface 631 of the support 63 may be slowed down by the round surface of the guide 54 and the water may be discharged or guided through the discharge hole 56 formed in the bottom wall 55. The noise generated from water falling in the water tank 10 may be reduced due to the decreased speed of the water flowing over the guide 54.

An upper end of the guide 54 may be in contact with and support the lower end 63b of the support 63. A groove 541 may be formed in the upper end of the guide 54. The lower end 63b of the support 63 may be placed on the partition plate 38 after the partition plate 38 is positioned in the groove 541. Alternatively, both the lower end 63b of the support 63 and the partition plate 38 may be placed on the groove 541 to be adjacent to each other. Further, a protruding portion that protrudes from the lower end 63b of the support 63 may rest on the guide 54. A lower surface of a lower portion of the light guide 53 may be configured to correspond to an upper surface of the guide 54 that is adjacent to the groove 541.

The water guide 50 may be assembled to be detachable from the light diffuser 63 and the partition plate 38. Alternatively, the water guide 50 may be more permanently joined (e.g., adhered to or fused) to the support 63 and the partition plate 38. When the water guide 50 is assembled to be detachable from the support 63 and the partition plate 38, the water guide 50 may be replaced with a water guide having a different shape or height.

A protrusion 511 may be formed on an inner side surface of the outer guide wall 51 to protrude toward the guide 54. An inner peripheral surface 512 of the outer guide wall 51 extending upward from the protruding portion 511 may be formed as an inclined surface that widens toward an upper end of the outer guide wall 51. A narrow drainage passage 521 may be formed between the protrusion 511 and the guide 54.

The water dropped from the water supply plate 30 into the water guide 50 may flow through the narrow drainage passage 521 after flowing over the guide 54 and the protrusion 511 for a relatively long time. Foreign matter may be filtered by the extension 511 and may not pass through the narrow drainage passage 521.

A covering or coating layer 59 may be formed on the inner peripheral surface 512 and an upper surface of the protrusion 511. The coating layer 59 may be formed of a material different from that of the water guide 50. The guide 54 may be formed of a material different from the water guide 50, so that the aesthetics may be improved or so a tactile feel may be smooth, and the falling water may be prevented from being scattered.

The upper end of the outer guide wall 51 may be formed to be higher than the inner guide wall 53 so as to project upward and outward beyond the upper wall 11a. The outer guide wall 51 may be formed to be wider than the extension 114 of the upper wall 11a. Referring to FIG. 2, a predetermined angle Θ may be formed between the outer guide wall 51 and the extension 114. The predetermined angle Θ may be, for example, 120 degrees.

The upper inclined surface 513 and the lower inclined surface 514 may be formed on an outer surface of the outer guide wall 51. The upper and lower inclined surfaces 513 and 514 may have different inclinations or slopes. A step portion 515 may be formed between the upper inclined surface 513 and the lower inclined surface 514. The step portion 515 may be formed at a position corresponding to a lower surface of the protrusion 511.

The lower inclined surface 514 may be an outer inclined surface supported by the inner tank wall 113 of the water tank 10. The step portion 515 of the water guide 50 may be seated on the upper surfaces of the first protruding plate 111. The upper inclined surface 513 may be supported by the bumper 115 attached to the upper wall 11a. The water guide 50 may therefore be securely positioned above the water tank 30 in a state in which it is caught by the upper wall 11a of the water tank 30.

A protruding jaw or extension 551 may be formed on an inner surface of the inner guide wall 53. The extension 551 may be formed to extend inward to form a bottom portion of the water guide 50. The extension 551 may be provided on an edge of the upper filter cover 46 described above. The upper filter cover 46 may be coupled to the extension 551 to cover an open inside of the extension 551, which may be an open lower end of the water guide 50

The extension 551 and the upper filter cover 46 may be detachably assembled by a known means such as an arm, a hook, or a screw. Alternatively, the extension 551 and the upper filter cover 46 may be joined to not be separated, such as by fusion or adhesion.

A sealed space or chamber S may be defined by the upper filter cover 46 on bottom, the partition plate 38 on top, and the inner guide wall 35 at a side. A battery B and controller C may be provided in the space S. Couplings of the upper filter cover 46 to the extension 551 and the partition plate 38 in the groove 541 may be configured (e.g., adhered, fused, welded, or bonded) to prevent or minimize water from seeping into the space S.

Figure 11 shows an alternative embodiment of a water guide 50 having substantially similar features of the embodiment of Figures 1-10 except that the bottom wall 55 may close a lower opening of the water guide 50 and serve as an upper filter cover. The upper filter cover 46 may be optional in the embodiment of Figure 11. In such an embodiment, the bottom wall 55 may cover upper ends of the first and second filters 42 and 44, and may have a hole through which the water supply pipe 25 penetrates.

As described above, the filter assembly 40, the pump 20, the water supply pipe 25, the water supply plate 30, the illumination assembly 60, and the water guide 50 may be integrally combined or assembled to form a single inner assembly 100. The inner assembly 100 may be easily separated from the water tank 10, the water in the water tank 10 may be easily exchanged, and the pet water dispenser may be easily cleaned or repaired.

When the inner assembly 100 is installed in the water tank 10, the water guide 50 may be caught by the upper wall 11a of the water tank 10 because the step portion 515 may be provided on the first protruding plate 111, the upper inclined surface 513 may be supported by the bumper 115, and the lower inclined surface 514 may be supported by the inner tank wall 113. Furthermore, when the inner assembly 100 is installed in the water tank 10, the lower filter cover 43 may be provided on the protrusion 121 formed on the bottom plate 12 and the flange 431 may be inserted into the groove 122. When the inner assembly 100 is installed in the water tank 10, the inner assembly 100 may be secured and maintained at a predetermined position. When the user lifts the outer guide wall 51, the inner assembly 100 may be detached or removed from the water tank 10.

Referring to Figures 2, 3, and 12, various electronic devices may be installed in the inner space of the container support 11b between the bottom plate 12 and the base plate 18. A power supply assembly to power the electronic devices may include a docking station 71 provided below the base plate 18. The docking station 71 may include a weight 711 having sufficient weight for balancing, a cylindrical protrusion or terminal 712 formed at a center of the weight 711 and including a first connection terminal, and an electrical wire 713 to apply external power from an external power source (e.g., electrical wall socket) to the first connection terminal. The weight 711 may also be referred to as a main body of the docking station 71.

A circular groove 182 may be formed on a bottom surface of the base plate 18 and may be provided with a second connection terminal connected to the first connection terminal. The protrusion 712 may be inserted into the groove 182 of the base plate 18 to connect the first and second connection terminals and to rotatably couple the docking station 71 and the base plate 18. The first and second connection terminals may be configured to maintain an electrical connection when the docking station 71 and base plate 18 are rotated relative to each other. For example, at least one of the first and second connection terminals may include a circular electrode. Therefore, even when the water tank 10 is rotated, a power supply to operate the pet water dispenser may be maintained without twisting the electrical wire 713.

A power circuit assembly 715 on a printed circuit board (PCB) may be installed in the inner space of the container support 11b and/or the inner space of the protrusion 121. The power circuit assembly 715 may be electrically connected to the second connection terminal of the base plate 18.

The first wireless power transfer device 72 may be electrically connected to the power circuit assembly 715 and provided below the bottom plate 12 in the protrusion 121. A second wireless power transfer device 73 (e.g., a wireless power receiver or transceiver to generate an induced voltage in response to a wireless power transmitter 72).

The first wireless power transfer device 72 may be provided in the inner space of the protrusion 121, and the second wireless power transfer device 73 may be provided in the inner assembly 100 in a space between a lower filter cover 43 and the pump 20. When the inner assembly 100 is installed in the water tank 10, the lower filter cover 43 may be inserted onto the protrusion 121 and the first and second wireless power transfer devices may be aligned with each other so that power may be generated via electromagnetic induction.

A thermoelectric element 81 to cool or heat the bottom plate 12 of the container 10a may be provided in the container support 11b above the base plate 18 and below the bottom plate 12. The thermoelectric element 81 may be a Peltier device or a thermoelectric cooler (TEC) to maintain a temperature of water stored in the water tank 10 at a predetermined temperature. A heat sink 84 may be provided below the thermoelectric element 81, and a heat radiation fan or fan 83 may be provided between the heat sink 84 and the thermoelectric element 81. A motor 82 to rotate the fan 83 may be installed between the bottom plate 12 and the base plate 18. The thermoelectric element 81 may be provided with a hollow portion or motor opening 811 in which the motor 82 is installed. The motor opening 811 may be formed at a central portion of the thermoelectric element 81. The fan 83 may be provided below the motor 82.

A water temperature sensor 85 (e.g., thermometer) may further be provided between the bottom plate 12 and the base plate 18. The water temperature sensor 85 may sense a temperature of the water stored in the water tank 10. The water temperature sensor 85 may be installed in a space inside the protrusion 121 of the bottom plate 12 of the water tank 10. The bottom plate 12 may be made of a material having high thermal conductivity or metal (e.g., stainless steel). Alternatively, the water temperature sensor 85 may partially protrude above the bottom plate 12 into the container of the water tank 10 to accurately measure a temperature of the water.

When the temperature of the water in the water tank 10 sensed by the water temperature sensor 85 is not within a predetermined temperature range, the thermoelectric element 81 may be activated to cool the water, and the heat of the thermoelectric element 81 may flow through the heat diffusing plate 84 to be dissipated. Alternatively, when the water temperature is below the predetermined temperature range, the thermoelectric element 81 may be activated to heat the water.

When a temperature of the thermoelectric element 81 is higher than a reference or predetermined temperature, or when a temperature of the heat diffusing plate 84 is higher than a reference or predetermined temperature, the motor 82 may be operated and the fan 83 may be rotated. When the fan 83 is rotated, outside air may flow through the ventilation holes 181 formed in the base plate 18 and pass through the heat diffusing plate 84, and then may be discharged to the outside through ventilation holes 181 formed in the base plate 18. The heat diffusing plate 84 and the thermoelectric element 81 may therefore be cooled. Alternatively or in addition thereto, there may be vents formed on a lower outer surface or corner of the container support 11b through which hot air may be exhausted.

The water temperature sensor 85 may be installed in the protrusion 121 of the bottom plate 12, which has a relatively large area in contact with the water stored in the water tank 10 and also with water about to flow into the pump 20. Therefore, the water temperature sensor 85 may accurately detect the temperature of the water stored in the water tank 10.

The container support 11b may be formed in a ring shape. The mounting portion 117 may include a sidewall 118. A groove or space may be formed in the upper surface of the sidewall 118 of the mounting portion 117, and a water level sensor 86 may be provided in the groove of the mounting portion 117. The water level sensor 86 may be a weight or load sensor or a strain gauge to measure a weight of water, and the controller C may determine a water level or water amount based on a detected weight by the water level sensor 86.

The mounting portion 117 may further hold a variety of other sensors, such as a proximity sensor 87 to sense a pet within a predetermined distance range, a gyro sensor 88 to sense a tilt or inclination of the pet water dispenser, or a pollution or contamination level sensor.

When the proximity sensor 87 senses a pet, the controller C may operate the pump 20. There may be a plurality of proximity sensors 87. The pumping capacity of the pump 20 may be adjusted according to detection values of the plurality of proximity sensors 87. For example, when the plurality of proximity sensors 87 sense a pet within a predetermined distance range, respectively, the controller C may determine that a plurality of pets have approached the water dispenser, and the pumping capacity or rate of the pump 20 may be increased. The warning light 91 may be emitted according to a detection value of the proximity sensor 87.

A gyro sensor 88 to sense an inclination of the water tank 10 may be provided between the bottom plate 12 and the base plate 18 inside the mounting space between the first and second inner walls 117b and 117c. A plurality of gyro sensors 88 may be provided to sense an inclination of each of the gyro sensors 88. The controller C may calculate a final inclination of the water tank 10 based on the sensed inclinations of the plurality of gyro sensors.

A pedestal may be also provided on a lower side of the water tank 10 to adjust a height. The controller C may correct a tilting or inclination of the water tank 10 by adjusting a height of the base leg and/or the pedestal when the inclination of the water tank 10 detected by the gyro sensor 88 is determined to be a predetermined inclination value or more.

A warning light 91 may be provided on a lower side of the container support 11b. The warning light 91 may be emitted according to a water level in the water tank 10 sensed by the water level sensor 86. The controller C may turn on the water light 91 when the water level detected by the water level sensor 86 is lower than a predetermined value to inform the user of a lack of water or to refill the water tank 10. The warning light 91 may be installed on a lower surface of the mounting portion 117 above the base plate 18 to be exposed to an outside. The warning light 91 may be a ring-shaped light emitting diode.

Embodiments disclosed herein may be implemented as a liquid dispenser that supplies drinking water to an animal such as a pet. However, embodiments disclosed herein are not limited to pets. For example, the liquid dispenser may be used in a zoo to supply drinking water to animals kept in a zoo, research areas, wildlife preservation areas, etc.

Embodiments disclosed herein may be implemented as a pet water dispenser capable of providing fresh water to a pet, controlling a temperature of water according to the species of pet, and accurately detecting a water level even when used for a long time. The problems solved by the present disclosure are not limited to the above-mentioned problems, and other problems not mentioned can be clearly understood by those skilled in the art from the following description.

A pet water dispenser according to an embodiment may include a water tank or tank having an opened upper side and an inner assembly covering the opened upper side of the water tank. The inner assembly may pressurize the water contained in the water tank to the upper surface of the inner assembly to provide the water to the pet.

An upper portion of the inner assembly may protrude upward from the water tank, and a lower portion of the inner assembly may be inserted into the water tank. An upper surface of the inner assembly may be protruded upward, and a pump for feeding water in the water tank to the upper surface may be provided below the inner assembly.

The water tank may be composed of a container and a container support. The container may be opened on the upper side. Water may be stored inside the container. The container support may be provided below the container.

An upper wall or upper side wall of the container may include protruding plates and an inner tank wall to support a water guide. The main wall or main sidewall of the container may be made of transparent material, while the upper wall may be made of an opaque material. Lengths and positions of the protruding plates may be configured to create a sloped inner tank wall.

A stepped portion may be formed between upper and lower inclined surfaces of an outer guide wall of the water guide, and the stepped portion may be placed on a first protruding plate of the water tank so that the upper inclined surface is supported by packing or a bumper.

Embodiments disclosed herein may provide a filter assembly having a first filter, a second filter provided inside the first filter, and a pump provided inside the second filter. The second filter may have an inner wall and an outer wall, and the pump may be provided inside the inner wall while a filter medium (e.g., carbon filter) is provided between the inner and outer walls. The first filter may have a plurality of through holes that are larger than a plurality of through holes of the outer wall of the second filter, which in turn are larger than a plurality of through holes of the inner wall of the second filter.

A projection or protrusion formed at a central portion of a bottom plate of the container may be formed to be convex in the shape of a cylinder toward an upper side. A water temperature sensor to sense the temperature of the water stored in the container may be provided inside the protrusion. The thermoelectric element can cool the bottom plate when the temperature of water sensed by the water temperature sensor is higher than a set value. A lower filter cover provided on a bottom end of the filter assembly may be inserted onto the protrusion to couple an inner assembly to the water tank. The bottom plate may further include a groove or recess surrounding the protrusion, and a flange of the lower filter cover may be inserted into the groove of the bottom plate to further secure the inner assembly inside the water tank.

An upper filter cover may be provided on a top end of the filter assembly, and the upper filter cover may be inserted into a bottom opening of the water guide. A partition plate may be inserted into a top opening of the water guide or on a groove provided on an upper surface of the water guide. The partition plate may further close a lower opening of an illumination assembly, and a water supply plate may be provided on top of the illumination assembly. A pipe of the pump may penetrate the upper filter cover, the partition plate, and extend through the illumination assembly to communicate with a hole of the water supply plate.

The upper filter cover may be provided under an extension of a bottom wall of a water guide, or alternatively the bottom wall of the water guide may extend across the lower opening of the water guide to replace the upper filter cover. The filter assembly may include at least one UV light or sterilization filter.

Water may be pumped from the water tank by the pump and transported to an upper surface of the water supply plate via the pipe of the pump and the hole in the water supply plate. Water may be sprayed outward across the upper surface of the water supply plate and fall off an edge of the water supply plate.

Power may be wirelessly transferred from a docking station under a base of the pet water dispenser to a removable inner assembly, which may include a pump, battery, and controller. Therefore, a risk of shock is reduced because there are less wires in the pet water dispenser. The inner assembly may be provided within the water tank by placing a convex cavity formed by a lower filter cover on top of a protrusion protruding upward from a bottom plate of the water tank, and also by resting a water guide of the inner assembly onto an upper wall of the water tank. The inner assembly may be easily lifted from the water tank by lifting the water guide from the upper wall of the water tank. The effects of the present disclosure are not limited to the effects mentioned above, and other effects not mentioned can be clearly understood by those skilled in the art from the description of the claims.

Embodiments disclosed herein may be implemented as a liquid dispenser comprising a tank having an upper opening and an inner assembly. The inner assembly may include a pump provided in the tank, a pipe through which liquid discharged from the pump flows therethrough, and a plate over which liquid discharged from the pipe flows, wherein the inner assembly may be seated on a bottom plate of the tank and within the upper opening of the tank to close the upper opening. The tank may have a diameter that decreases from a bottom end to a top end, and the inner assembly may have a diameter that increases from a bottom end to a top end.

An outer wall of the inner assembly may be supported by an inner tank wall of an upper wall of the tank. A bottom end of the inner assembly may be supported by a cylindrical shell protruding upward from the bottom plate of the tank. The upper wall of the tank may be provided above a main wall of the tank, the main wall of the tank may be made of a transparent material, and the upper wall may be made of an opaque material. First and second protruding plates may extend horizontally from an inner surface of the upper wall toward a center of the tank, and the inner tank wall may extend between inner ends of the first and second protruding plates so as to be inclined outward from a bottom end to a top end.

The outer wall of the inner assembly may include a stepped portion. A bumper may be provided on an extension of the upper wall of the tank, and the outer wall of the inner assembly may rest on the bumper. When the inner assembly is seated on the bottom plate of the tank, an outer wall of the inner assembly may extend upward and outward beyond an upper end of the tank.

The inner assembly may include a filter assembly having at least one filter to filter foreign matter from liquid in the tank and entering the pump. The filter assembly may include a first filter surrounding a second filter. The second filter may surround the pump. The first filter may be formed of a wall having a plurality of through holes, the second filter may be formed of an inner and outer wall each having a plurality of through holes, and a filter material may be provided between the inner and outer walls of the second filter. The plurality of through holes of the wall of the first filter may be larger than the plurality of through holes of the outer wall of the second filter, and the plurality of through holes of the outer wall of the second filter may be larger than the plurality of through holes of the inner wall of the second filter.

A lower filter cover may be provided to cover a bottom end of the filter assembly and may include a concave cavity configured to fit on top of a protrusion formed to protrude upward from the bottom plate. A groove may be formed in the bottom plate to surround the protrusion and a flange may be formed on a bottom end of the lower filter cover configured to fit within the groove of the bottom plate. A water guide may have the outer wall of the inner assembly. An upper filter cover may be provided to cover an upper end of the filter assembly. The upper filter cover may be provided under an extension of a bottom wall of the water guide, and the pipe may penetrate through the upper filter cover.

A water guide may have the outer wall of the inner assembly and a bottom wall through which the pipe penetrates.

The inner assembly may include a partition plate, and the pipe may penetrate the partition plate.

The inner assembly may include at least one light that emits ultraviolet (UV) radiation to sterilize liquid in the tank. The at least one light may be provided to at least partially surround the pipe.

Embodiments disclosed herein may be implemented as a liquid dispenser comprising a tank having an upper opening, and an inner assembly. The inner assembly includes a pump to pump liquid stored in the tank, a pipe to transfer liquid discharged from the pump, a plate over which liquid discharged from the pipe flows, and a filter assembly surrounding the pump. The filter assembly may be seated on a protrusion formed in a bottom plate of the tank.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the invention defined by the appended claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A liquid dispenser for animals, comprising:
a tank (10) having an upper opening; and
an inner assembly (100) including:
a pump (20) provided in the tank (10);
a pipe (25) through which liquid discharged from the pump (20) flows therethrough; and
a plate (30) over which liquid discharged from the pipe (25) flows, wherein the inner assembly (100) is seated on a bottom plate (12) of the tank (10) and within the upper opening of the tank (10) to close the upper opening,
said liquid dispenser being **characterized in that** the inner assembly (100) further includes a filter assembly (40) surrounding the pump (20).

2. The liquid dispenser for animals of claim 1, wherein the tank (10) has a diameter that decreases from a bottom end to a top end, and the inner assembly (100) has a diameter that increases from a bottom end to a top end.

3. The liquid dispenser for animals of claim 1 or 2, wherein an outer wall (51) of the inner assembly (100) is supported by an inner tank wall (113) of an upper wall of the tank (10), and wherein a bottom end of the inner assembly (100) is supported by a cylindrical shell protruding upward from the bottom plate (12) of the tank (10).

4. The liquid dispenser for animals of claim 3, wherein first and second protruding plates (111, 112) extend horizontally from an inner surface of the upper wall toward a center of the tank (10), and the inner tank wall (113) extends between inner ends of the first and second protruding plates (111, 112) so as to be inclined outward from a bottom end to a top end.

5. The liquid dispenser for animals of claim 3 or 4, wherein the outer wall (51) of the inner assembly (100) includes a stepped portion.

6. The liquid dispenser for animals of any one of claims 3 to 5, wherein a bumper (115) is provided on an extension of the upper wall of the tank (10), and the outer wall (51) of the inner assembly (100) rests on the bumper (115).

7. The liquid dispenser for animals of any one of the preceding claims, wherein, when the inner assembly (100) is seated on the bottom plate (12) of the tank (10), an outer wall (51) of the inner assembly (100) extends upward and outward beyond an upper end of the tank (10).

8. The liquid dispenser for animals of any one of the preceding claims,
wherein the filter assembly (40) has at least one filter to filter foreign matter from liquid in the tank (10) and entering the pump (20),
wherein the filter assembly (40) is seated on a protrusion formed in a bottom plate (12) of the tank (10).

9. The liquid dispenser for animals of claim 8, wherein the filter assembly (40) includes a first filter (42) surrounding a second filter (44), the second filter (44) surrounding the pump (20).

10. The liquid dispenser for animals of claim 8 or 9, wherein a lower filter cover (43) is provided to cover a bottom end of the filter assembly (40) and includes a concave cavity configured to fit on top of a protrusion (121) formed to protrude upward from the bottom plate (12).

11. The liquid dispenser for animals of any one of claims 8 to 10, further including a water guide (50) having the outer wall (51) of the inner assembly (100), and also including an upper filter cover (46) provided to cover an upper end of the filter assembly (40), wherein the upper filter cover (46) is provided under an extension of a bottom wall of the water guide (50), and the pipe (25) penetrates through the upper filter cover (46).

12. The liquid dispenser for animals of any one of claims 8 to 10, further including a water guide (50) having the outer wall (51) of the inner assembly (100) and a bottom wall through which the pipe (25) penetrates.

13. The liquid dispenser for animals of any one of the preceding claims, wherein the inner assembly (100) includes a partition plate (38), and the pipe (25) penetrates the partition plate (38).

14. The liquid dispenser for animals of any one of the preceding claims, wherein the inner assembly (100) includes at least one light that emits ultraviolet (UV) radiation to sterilize liquid in the tank (10).

## Patentansprüche

1. Flüssigkeitsspender für Tiere, der aufweist:
einen Behälter (10) mit einer oberen Öffnung; und
eine innere Anordnung (100), die enthält:
eine Pumpe (20), die im Behälter (10) vorgesehen ist,
ein Rohr (25), durch das von der Pumpe (20) abgegebene Flüssigkeit fließt, und
eine Platte (30), über die aus dem Rohr (25) abgegebene Flüssigkeit fließt, wobei die innere Anordnung (100) auf einer Bodenplatte (12) des Behälters (10) und innerhalb der oberen Öffnung des Behälters (10) sitzt, um die obere Öffnung zu verschließen,
wobei der Flüssigkeitsspender **dadurch gekennzeichnet ist, dass**
die innere Anordnung (100) ferner eine Filteranordnung (40) enthält, die die Pumpe (20) umgibt.

2. Flüssigkeitsspender für Tiere nach Anspruch 1, wobei der Behälter (10) einen Durchmesser aufweist, der von einem unteren Ende zu einem oberen Ende hin abnimmt, und die innere Anordnung (100) einen Durchmesser aufweist, der von einem unteren Ende zu einem oberen Ende hin zunimmt.

3. Flüssigkeitsspender für Tiere nach Anspruch 1 oder 2, wobei eine Außenwand (51) der inneren Anordnung (100) von einer inneren Behälterwand (113) einer oberen Wand des Behälters (10) gehalten wird, und wobei ein unteres Ende der inneren Anordnung (100) von einer zylindrischen Schale gehalten wird, die von der Bodenplatte (12) des Behälters (10) nach oben vorsteht.

4. Flüssigkeitsspender für Tiere nach Anspruch 3, wobei sich eine erste und eine zweite vorstehende Platte (111, 112) horizontal von einer Innenfläche der oberen Wand zu einer Mitte des Behälters (10) hin erstrecken und die innere Behälterwand (113) sich zwischen den inneren Enden der ersten und der zweiten vorstehenden Platte (111, 112) so erstreckt, dass sie von einem unteren Ende zu einem oberen Ende nach außen geneigt ist.

5. Flüssigkeitsspender für Tiere nach Anspruch 3 oder 4, wobei die Außenwand (51) der inneren Anordnung (100) einen abgestuften Abschnitt aufweist.

6. Flüssigkeitsspender für Tiere nach einem der Ansprüche 3 bis 5, wobei ein Stoßdämpfer (115) an einer Verlängerung der oberen Wand des Behälters (10) vorgesehen ist und die Außenwand (51) der inneren Anordnung (100) auf dem Stoßdämpfer (115) ruht.

7. Flüssigkeitsspender für Tiere nach einem der vorhergehenden Ansprüche, wobei, wenn die innere Anordnung (100) auf der Bodenplatte (12) des Behälters (10) sitzt, eine Außenwand (51) der inneren Anordnung (100) sich nach oben und nach außen über ein oberes Ende des Behälters (10) hinaus erstreckt.

8. Flüssigkeitsspender für Tiere nach einem der vorhergehenden Ansprüche, wobei die Filteranordnung (40) mindestens einen Filter aufweist, um Fremdkörper aus der Flüssigkeit im Behälter (10) zu filtern, die in die Pumpe (20) eintritt,
wobei die Filteranordnung (40) auf einem Vorsprung sitzt, der in einer Bodenplatte (12) des Behälters (10) ausgebildet ist.

9. Flüssigkeitsspender für Tiere nach Anspruch 8, wobei die Filteranordnung (40) einen ersten Filter (42) enthält, der einen zweiten Filter (44) umgibt, wobei der zweite Filter (44) die Pumpe (20) umgibt.

10. Flüssigkeitsspender für Tiere nach Anspruch 8 oder 9, wobei eine untere Filterabdeckung (43) vorgesehen ist, um ein unteres Ende der Filteranordnung (40) abzudecken, und einen konkaven Hohlraum aufweist, der so konfiguriert ist, dass er auf einen Vorsprung (121) passt, der so ausgebildet ist, dass er von der Bodenplatte (12) nach oben vorsteht.

11. Flüssigkeitsspender für Tiere nach einem der Ansprüche 8 bis 10, der ferner eine Wasserführung (50) aufweist, die die Außenwand (51) der inneren Anordnung (100) aufweist, und außerdem eine obere Filterabdeckung (46) aufweist, die vorgesehen ist, um ein oberes Ende der Filteranordnung (40) abzudecken, wobei die obere Filterabdeckung (46) unter einer Verlängerung einer Bodenwand der Wasserführung (50) vorgesehen ist und das Rohr (25) die obere Filterabdeckung (46) durchdringt.

12. Flüssigkeitsspender für Tiere nach einem der Ansprüche 8 bis 10, der ferner eine Wasserführung (50) aufweist, die die Außenwand (51) der inneren Anordnung (100) und eine Bodenwand aufweist, durch die das Rohr (25) hindurchgeht.

13. Flüssigkeitsspender für Tiere nach einem der vorhergehenden Ansprüche, wobei die innere Anordnung (100) eine Trennplatte (38) aufweist und das Rohr (25) die Trennplatte (38) durchdringt.

14. Der Flüssigkeitsspender für Tiere nach einem der vorhergehenden Ansprüche, wobei die innere Anordnung (100) mindestens ein Licht enthält, das ultraviolette (UV) Strahlung aussendet, um die Flüssigkeit im Behälter (10) zu sterilisieren.

## Revendications

1. Distributeur de liquide pour animaux, comprenant :
un réservoir (10) ayant une ouverture supérieure ; et
un ensemble intérieur (100) comportant :
une pompe (20) prévue dans le réservoir (10) ;
une conduite (25) par laquelle s'écoule le liquide refoulé de la pompe (20) ; et
une plaque (30) sur laquelle s'écoule le liquide refoulé de la conduite (25), l'ensemble intérieur (100) étant placé sur une plaque de fond (12) du réservoir (10) et à l'intérieur de l'ouverture supérieure du réservoir (10) pour fermer l'ouverture supérieure,
ledit distributeur de liquide étant **caractérisé en ce que**
l'ensemble intérieur (100) comporte en outre un ensemble de filtre (40) entourant la pompe (20).

2. Distributeur de liquide pour animaux selon la revendication 1, où le réservoir (10) a un diamètre qui diminue d'une extrémité inférieure à une extrémité supérieure, et l'ensemble intérieur (100) a un diamètre qui augmente d'une extrémité inférieure à une extrémité supérieure.

3. Distributeur de liquide pour animaux selon la revendication 1 ou la revendication 2, où une paroi extérieure (51) de l'ensemble intérieur (100) est supportée par une paroi de réservoir intérieure (113) d'une paroi supérieure du réservoir (10), et où une extrémité inférieure de l'ensemble intérieur (100) est supportée par une coque cylindrique dressée vers le haut depuis la plaque de fond (12) du réservoir (10).

4. Distributeur de liquide pour animaux selon la revendication 3, où une première et une deuxième plaques en saillie (111, 112) s'étendent horizontalement depuis une surface intérieure de la paroi supérieure vers le centre du réservoir (10), et la paroi de réservoir intérieure (113) s'étend entre les extrémités intérieures de la première et de la deuxième plaques en saillie (111, 112) de manière à être inclinée vers l'extérieur d'une extrémité inférieure à une extrémité supérieure.

5. Distributeur de liquide pour animaux selon la revendication 3 ou la revendication 4, où la paroi extérieure (51) de l'ensemble intérieur (100) comprend une partie étagée.

6. Distributeur de liquide pour animaux selon l'une des revendications 3 à 5, où un butoir (115) est prévu sur une extension de la paroi supérieure du réservoir (10), et où la paroi extérieure (51) de l'ensemble intérieur (100) repose sur le butoir (115).

7. Distributeur de liquide pour animaux selon l'une des revendications précédentes, où, lorsque l'ensemble intérieur (100) est placé sur la plaque de fond (12) du réservoir (10), une paroi extérieure (51) de l'ensemble intérieur (100) s'étend vers le haut et vers l'extérieur au-delà d'une extrémité supérieure du réservoir (10).

8. Distributeur de liquide pour animaux selon l'une des revendications précédentes, où l'ensemble de filtre (40) comporte au moins un filtre pour filtrer les matières étrangères du liquide dans le réservoir (10) et pénétrant dans la pompe (20),
où l'ensemble de filtre (40) est placé sur une saillie formée dans une plaque de fond (12) du réservoir (10).

9. Distributeur de liquide pour animaux selon la revendication 8, où l'ensemble de filtre (40) comprend un premier filtre (42) entourant un deuxième filtre (44), le deuxième filtre (44) entourant la pompe (20).

10. Distributeur de liquide pour animaux selon la revendication 8 ou la revendication 9, où un couvercle de filtre inférieur (43) est prévu pour couvrir une extrémité inférieure de l'ensemble de filtre (40), et comprend une cavité concave prévue pour s'adapter au sommet d'une saillie (121) formée de manière à s'étendre vers le haut depuis la plaque de fond (12).

11. Distributeur de liquide pour animaux selon l'une des revendications 8 à 10, comprenant en outre un guidage d'eau (50) comportant la paroi extérieure (51) de l'ensemble intérieur (100), et comprenant également un couvercle de filtre supérieur (46) prévu pour couvrir une extrémité supérieure de l'ensemble de filtre (40), ledit couvercle de filtre supérieur (46) étant prévu sous une extension d'une paroi inférieure du guidage d'eau (50), et la conduite (25) traversant le couvercle de filtre supérieur (46).

12. Distributeur de liquide pour animaux selon l'une des revendications 8 à 10, comprenant en outre un guidage d'eau (50) comportant la paroi extérieure (51) de l'ensemble intérieur (100) et une paroi inférieure que la conduite (25) traverse.

13. Distributeur de liquide pour animaux selon l'une des revendications précédentes, où l'ensemble intérieur (100) comprend une plaque de séparation (38), et la conduite (25) pénètre dans la plaque de séparation (38).

14. Distributeur de liquide pour animaux selon l'une des revendications précédentes, où l'ensemble intérieur (100) comprend au moins une lumière émettant un rayonnement ultraviolet (UV) pour stériliser le liquide dans le réservoir (10).
